# EUROPEAN PATENT APPLICATION

(11) **EP 4 238 938 A1**
(43) Date of publication of application: **06.09.2023**
(21) Application number: 21885686.2
(22) Date of filing: 30.08.2021
(51) Int. Cl.: C01G 35/00, H01M 4/62, H01M 10/052, H01M 10/0562, H01B 1/06

(54) **SOLID ELECTROLYTE MATERIAL, AND BATTERY IN WHICH SAME IS USED**

(30) Priority: 30.10.2020 JP 2020182797
(71) Applicant: Panasonic Intellectual Property Management Co., Ltd., Kadoma-shi, Osaka 571-0057 (JP)
(72) Inventor: TANAKA, Yoshiaki, Kadoma-shi Osaka 571-0057 (JP); ASANO, Tetsuya, Kadoma-shi Osaka 571-0057 (JP); SAKAI, Akihiro, Kadoma-shi Osaka 571-0057 (JP)
(74) Representative: Eisenführ Speiser
(86) International application number: PCT/JP2021/031799
(87) International publication number: WO 2022/091567

(57) **Abstract**

A solid electrolyte material of the present disclosure includes: Li; M; O; and X. The M is at least one selected from the group consisting of Nb and Ta. The X is at least one selected from the group consisting of F, Cl, Br, and I. The solid electrolyte material of the present disclosure has, in an X-ray diffraction pattern obtained by X-ray diffraction measurement using a Cu-Kα ray, a first peak positioned within a range of a diffraction angle 2θ from 13.49° to 13.59° and a second peak positioned within a range of the diffraction angle 2θ from 14.82° to 14.92°. An intensity ratio of the first peak to the second peak is 0.50 or more and 4.50 or less.

## Description

### TECHNICAL FIELD

The present disclosure relates to a solid electrolyte material and a battery in which the same is used.

### BACKGROUND ART

Patent Literatures 1 and 2 disclose a solid electrolyte material including Li, M, O, and X, where M is at least one element selected from the group consisting of Nb and Ta, and X is at least one element selected from the group consisting of Cl, Br, and I.

### CITATION LIST

### Patent Literature

Patent Literature 1: WO 2020/137153 A1
Patent Literature 2: WO 2020/137155 A1

### SUMMARY OF INVENTION

### Technical Problem

The present disclosure aims to provide a solid electrolyte material that has a practical ionic conductivity and can reduce a heat-induced decrease in ionic conductivity.

### Solution to Problem

A solid electrolyte material of the present disclosure includes:
Li;
M;
O; and
X, wherein
   the M is at least one selected from the group consisting of Nb and Ta,
   the X is at least one selected from the group consisting of F, Cl, Br, and I,
   the solid electrolyte material has, in an X-ray diffraction pattern obtained by X-ray diffraction measurement using a Cu-Kα ray, a first peak positioned within a range of a diffraction angle 2θ from 13.49° to 13.59° and a second peak positioned within a range of the diffraction angle 2θ from 14.82° to 14.92°, and
   an intensity ratio of the first peak to the second peak is 0.50 or more and 4.50 or less.

### Advantageous Effects of Invention

The present disclosure provides a solid electrolyte material that has a practical ionic conductivity and can reduce a heat-induced decrease in ionic conductivity.

### BRIEF DESCRIPTION OF DRAWINGS

FIG. 1 shows a cross-sectional view of a battery 1000 according to a second embodiment.
FIG. 2 shows a cross-sectional view of an electrode material 1100 according to the second embodiment.
FIG. 3 shows a schematic view of a pressure-molding die 300 used to evaluate the ionic conductivity of solid electrolyte materials.
FIG. 4 is a graph showing the X-ray diffraction patterns of solid electrolyte materials according to Examples 1 to 3 and Comparative Examples 1 and 2.

### DESCRIPTION OF EMBODIMENTS

Embodiments of the present disclosure will be described below with reference to the drawings. The present disclosure is not limited to the following embodiments.

### (First Embodiment)

A solid electrolyte material according to a first embodiment includes Li, M, O, and X. M is at least one selected from the group consisting of Nb and Ta. X is at least one selected from the group consisting of F, Cl, Br, and I. The solid electrolyte material according to the first embodiment has, in an X-ray diffraction pattern obtained by X-ray diffraction measurement using a Cu-Kα ray, a first peak positioned within a range of a diffraction angle 2θ from 13.49° to 13.59° and a second peak positioned within a range of the diffraction angle 2θ from 14.82° to 14.92°. The intensity ratio of the first peak to the second peak is 0.50 or more and 4.50 or less. In the case where a plurality of peaks are present within the range of the diffraction angle 2θ from 13.49° to 13.59°, the first peak is the peak having the maximum intensity among the plurality of peaks. Further, in the case where a plurality of peaks are present within the range of the diffraction angle 2θ from 14.82° to 14.92°, the second peak is the peak having the maximum intensity among the plurality of peaks.

The solid electrolyte material including Li, M, O, and X according to the first embodiment includes a crystalline phase having the above X-ray diffraction pattern. Owing to including the crystalline phase, the solid electrolyte material according to the first embodiment has a practical ionic conductivity and can reduce a heat-induced decrease in ionic conductivity.

More specifically, in a solid electrolyte material that includes Li, M, O, and X and includes a crystalline phase having the above X-ray diffraction pattern, paths for diffusion of lithium ions are easily formed, and at the same time, a heat-induced evaporation of the constituent elements is suppressed. As a result, the solid electrolyte material according to the first embodiment can achieve a practical ionic conductivity, and at the same time, can reduce a heat-induced decrease in ionic conductivity. The solid electrolyte material according to the first embodiment can have, for example, a high lithium-ion conductivity and an excellent heat resistance.

Here, a high lithium-ion conductivity is, for example, 4.0 mS/cm or more near room temperature. The solid electrolyte material according to the first embodiment can have an ionic conductivity of, for example, 4.0 mS/cm or more.

Next, a description will be given on an example of heat to which the solid electrolyte material is to be exposed. In manufacturing large-size batteries, a high-temperature heat treatment process is required for densification and joining of positive electrodes, electrolyte layers, and negative electrode of the batteries. The temperature for the heat treatment process is, for example, about 200°C. Even after a heat treatment at about 200°C, a decrease in ionic conductivity of the solid electrolyte material according to the first embodiment is reduced or does not occur. Thus, the solid electrolyte material according to the first embodiment has an excellent heat resistance. Therefore, the solid electrolyte material according to the first embodiment can be used for achieving a battery having excellent charge and discharge characteristics.

The solid electrolyte material according to the first embodiment can maintain a high lithium-ion conductivity within an expected battery operating temperature range (e.g., a range from -30°C to 80°C). Therefore, a battery in which the solid electrolyte material according to the first embodiment is used can stably operate even in an environment where the temperature varies.

The solid electrolyte material according to the first embodiment can be used to achieve a battery having excellent charge and discharge characteristics. An example of the battery is an all-solid-state battery. The all-solid-state battery may be a primary battery or a secondary battery.

From the viewpoint of safety, it is desirable that the solid electrolyte material according to the first embodiment should be substantially free of sulfur. The phrase "the solid electrolyte material according to the first embodiment is substantially free of sulfur" means that the solid electrolyte material does not contain sulfur as a constituent element except for sulfur inevitably introduced as impurities. In this case, sulfur introduced as impurities into the solid electrolyte material has an amount of, for example, 1 mol% or less. From the viewpoint of safety, it is desirable that the solid electrolyte material according to the first embodiment should be free of sulfur. A solid electrolyte material that is free of sulfur generates no hydrogen sulfide when exposed to the atmosphere, and is accordingly excellent in safety.

To increase the ionic conductivity and heat resistance of the solid electrolyte material, the solid electrolyte material according to the first embodiment may consist substantially of Li, M, O, and X. Here, the phrase "the solid electrolyte material according to the first embodiment consists substantially of Li, M, O, and X" means that the ratio of the sum of the amounts of substance of Li, M, O, and X to the total of the amounts of substance of all the elements constituting the solid electrolyte material according to the first embodiment is 90% or more. In an example, the ratio may be 95% or more.

To increase the ionic conductivity and heat resistance of the solid electrolyte material, the solid electrolyte material according to the first embodiment may consist of Li, M, O, and X.

To increase the ionic conductivity and heat resistance of the solid electrolyte material, X in the solid electrolyte material according to the first embodiment may include Cl. X may be Cl.

To increase the ionic conductivity and heat resistance of the solid electrolyte material, M in the solid electrolyte material according to the first embodiment may include Ta. M may be Ta.

To increase the ionic conductivity and heat resistance of the solid electrolyte material, the molar ratio of Li to M in the solid electrolyte material according to the first embodiment may be 1.2 or more and 1.4 or less.

The X-ray diffraction pattern of the solid electrolyte material according to the first embodiment can be obtained by X-ray diffraction measurement according to the θ-2θ method using Cu-Kα rays (wavelengths of 1.5405 Å and 1.5444 Å, i.e., wavelengths of 0.15405 nm and 0.15444 nm).

The diffraction angle of a peak in the X-ray diffraction pattern is defined as the angle at which the maximum intensity is exhibited for a projecting portion having an SN ratio (i.e., a ratio of a signal S to a background noise N) of 3 or more and a half width of 10° or less. The half width refers to the width represented by the difference between two diffraction angles at which the intensity is half of I_{MAX}, where I_{MAX} is the maximum intensity of the X-ray diffraction peak.

As described above, in the X-ray diffraction pattern of the solid electrolyte material according to the first embodiment, the intensity ratio of the first peak to the second peak is 0.50 or more and 4.50 or less. The intensity ratio of the first peak to the second peak may be 0.70 or more and 1.72 or less, or may be 1.05 or more and 1.72 or less.

The upper and lower limits for the intensity ratio of the first peak to the second peak can be defined by any combination of numerical values selected from 0.50, 0.7, 1.0, 1.05.1.5, 1.72, 2.0, 2.5, 3.0, 3.5, 4.0, and 4.50.

The shape of the solid electrolyte material according to the first embodiment is not limited. The shape is, for example, acicular, spherical, or ellipsoidal. The solid electrolyte material according to the first embodiment may be particulate. The solid electrolyte material according to the first embodiment may be formed in the shape of a pellet or a plate.

In the case where the shape of the solid electrolyte material according to the first embodiment is particulate (e.g., spherical), the solid electrolyte material may have a median diameter of 0.1 µm or more and 100 µm or less, or may have a median diameter of 0.5 µm or more and 10 µm or less. In this case, the solid electrolyte material according to the first embodiment and other materials can be favorably dispersed. The median diameter of particles means the particle diameter (d50) at a cumulative volume equal to 50% in the volumetric particle size distribution. The volumetric particle size distribution can be measured with a laser diffraction measurement device or an image analysis device.

In the case where the shape of the solid electrolyte material according to the first embodiment is particulate (e.g., spherical), the solid electrolyte material may have a smaller median diameter than the active material. In this case, the solid electrolyte material according to the first embodiment and the active material can form a favorable dispersion state.

### <Method of Manufacturing Solid Electrolyte Material>

The solid electrolyte material according to the first embodiment can be manufactured by the following method.

Raw material powders are prepared so as to obtain a target composition. Examples of the raw material powders include an oxide, a hydroxide, a halide, and an acid halide.

In an example, in the case where a solid electrolyte material consists of Li, Ta, O, and Cl (i.e., a solid electrolyte material includes M that is Ta and X that is Cl) and has a molar ratio Li/M of 1.3 in the raw material mixing, Li₂O₂ and TaCl₅ are mixed together at a molar ratio of Li₂O₂:TaCl₅ = 0.65:1.0. M and X are determined by selecting the raw material powders. The molar ratio Li/M is determined by selecting the mixing ratio between the raw material powders. The raw material powders may be mixed together at a molar ratio adjusted in advance so as to cancel out a composition change which can occur in the synthesis process.

The mixture of the raw material powders is fired to obtain a reaction product. To suppress evaporation of the raw materials due to firing, the mixture of the raw material powders may be sealed in an airtight container formed of quartz glass or borosilicate glass and fired in a vacuum or an inert gas atmosphere. The inert gas atmosphere is, for example, an argon atmosphere or a nitrogen atmosphere. Alternatively, the mixture of the raw material powders may be reacted with each other mechanochemically in a mixer such as a planetary ball mill to obtain a reaction product. That is, mixing and reaction of the raw material powders may be performed by a mechanochemical milling method. By these methods, the solid electrolyte material according to the first embodiment is obtained.

Firing of the solid electrolyte material sometimes causes evaporation of a portion of M or a portion of X. This can result in a larger value of the molar ratio Li/M in the resultant solid electrolyte material than the value calculated from the molar ratio between the prepared raw material powders.

By selecting the type of raw material powders, the mixing ratio between the raw material powders, and the reaction conditions, the position of the X-ray diffraction peak, that is, the crystalline phase configuration, of the solid electrolyte material according to the first embodiment can be adjusted to a desired one.

The composition of the solid electrolyte material can be determined, for example, by an inductively coupled plasma (ICP) emission spectrometry, an ion chromatography, or an inert gas fusion-infrared absorption method. For example, the compositions of Li and M can be determined by the ICP emission spectrometry, the composition of X can be determined by the ion chromatography, and the composition of O can be determined by the inert gas fusion-infrared absorption method.

### (Second Embodiment)

A second embodiment will be described below. The matters described in the first embodiment will be omitted as appropriate.

A battery according to the second embodiment includes a positive electrode, an electrolyte layer, and a negative electrode. The electrolyte layer is disposed between the positive electrode and the negative electrode. At least one selected from the group consisting of the positive electrode, the electrolyte layer, and the negative electrode includes the solid electrolyte material according to the first embodiment.

The battery according to the second embodiment includes the solid electrolyte material according to the first embodiment. Accordingly, the battery according to the second embodiment has excellent charge and discharge characteristics even after undergoing a high-temperature exposure such as a high-temperature heat treatment in the battery manufacture.

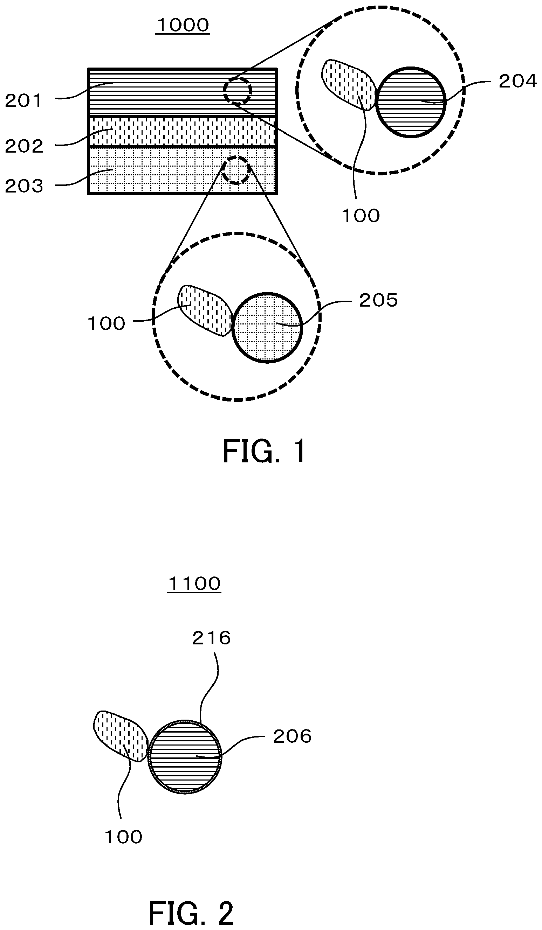

FIG. 1 shows a cross-sectional view of a battery 1000 according to the second embodiment.

The battery 1000 includes a positive electrode 201, an electrolyte layer 202, and a negative electrode 203. The electrolyte layer 202 is disposed between the positive electrode 201 and the negative electrode 203.

The positive electrode 201 includes positive electrode active material particles 204 and solid electrolyte particles 100.

The electrolyte layer 202 includes an electrolyte material. The electrolyte material is, for example, a solid electrolyte material.

The negative electrode 203 includes negative electrode active material particles 205 and the solid electrolyte particles 100.

The solid electrolyte particles 100 are particles including the solid electrolyte material according to the first embodiment. The solid electrolyte particles 100 may be particles including the solid electrolyte material according to the first embodiment as the main component. The particles including the solid electrolyte material according to the first embodiment as the main component refer to particles in which the component contained in the largest amount in molar ratio is the solid electrolyte material according to the first embodiment. The solid electrolyte particles 100 may be particles consisting of the solid electrolyte material according to the first embodiment.

The positive electrode 201 includes a material capable of occluding and releasing metal ions such as lithium ions. The positive electrode 201 includes, for example, a positive electrode active material (e.g., the positive electrode active material particles 204).

Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include Li(Ni, Co, Al)O₂, Li(Ni, Co, Mn)O₂, and LiCoO₂.

In the present disclosure, an expression "(A, B, C)" refers to "at least one selected from the group consisting of A, B, and C".

From the viewpoint of cost and safety of the battery, lithium phosphate may be used as the positive electrode active material.

In the case where the positive electrode 201 includes a solid electrolyte material according to the first embodiment in which X includes I (i.e., iodine), lithium iron phosphate may be used as the positive electrode active material. The solid electrolyte material according to the first embodiment that includes I is susceptible to oxidation. Using lithium iron phosphate as the positive electrode active material suppresses an oxidation reaction of the solid electrolyte material. That is, formation of an oxide layer having a low lithium-ion conductivity is suppressed. As a result, the battery has a high charge and discharge efficiency.

The positive electrode 201 may include, in addition to the solid electrolyte material according to the first embodiment, a transition metal oxyfluoride as the positive electrode active material. The solid electrolyte material according to the first embodiment is not susceptible to formation of a resistance layer even when the solid electrolyte material is fluorinated by the transition metal fluoride. As a result, the battery has a high charge and discharge efficiency.

The transition metal oxyfluoride contains oxygen and fluorine. In an example, the transition metal oxyfluoride may be a compound represented by a composition formula LiₚMe_{q}OₘFₙ. Here, Me is at least one selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, and the following mathematical relations are satisfied: 0.5 ≤ p ≤ 1.5; 0.5 ≤ q ≤ 1.0; 1 ≤ m < 2; and 0 < n ≤ 1. An example of such a transition metal oxyfluoride is Li_{1.05}(Ni_{0.35}CO_{0.35}Mn_{0.3})_{0.95}O_{1.9}F_{0.1}.

The positive electrode active material particles 204 may have a median diameter of 0.1 µm or more and 100 µm or less. In the case where the positive electrode active material particles 204 have a median diameter of 0.1 µm or more, the positive electrode active material particles 204 and the solid electrolyte particles 100 can form a favorable dispersion state in the positive electrode 201. This improves the charge and discharge characteristics of the battery. In the case where the positive electrode active material particles 204 have a median diameter of 100 µm or less, the diffusion rate of lithium in the positive electrode active material particles 204 is improved. This enables the battery to operate at a high power.

The positive electrode active material particles 204 may have a larger median diameter than the solid electrolyte particles 100. In this case, the positive electrode active material particles 204 and the solid electrolyte particles 100 can form a favorable dispersion state.

From the viewpoint of energy density and power output of the battery, the ratio of the volume of the positive electrode active material particles 204 to the sum of the volume of the positive electrode active material particles 204 and the volume of the solid electrolyte particles 100 in the positive electrode 201 may be 0.30 or more and 0.95 or less.

FIG. 2 shows a cross-sectional view of an electrode material 1100 according to the second embodiment. The electrode material 1100 is, for example, included in the positive electrode 201. To prevent the solid electrolyte particles 100 from reacting with the positive electrode active material (i.e., electrode active material particles 206), a coating layer 216 may be formed on the surface of each of the electrode active material particles 206. In this case, an increase in reaction overvoltage of the battery can be suppressed. Examples of the coating material included in the coating layer 216 include a sulfide solid electrolyte, an oxide solid electrolyte, and a halide solid electrolyte.

In the case where the solid electrolyte particles 100 are those of a sulfide solid electrolyte, the coating material may be the solid electrolyte material according to the first embodiment in which X is at least one selected from the group consisting of Cl and Br. Such a solid electrolyte material according to the first embodiment is less susceptible to oxidation than the sulfide solid electrolyte. As a result, an increase in reaction overvoltage of the battery can be suppressed.

In the case where the solid electrolyte particles 100 are those of a solid electrolyte material according to the first embodiment in which X includes I, the coating material may be a solid electrolyte material according to the first embodiment in which X is at least one selected from the group consisting of Cl and Br. A solid electrolyte material according to the first embodiment that does not include I is less susceptible to oxidation than a solid electrolyte material according to the first embodiment that includes I. As a result, the battery has a high charge and discharge efficiency.

In the case where the solid electrolyte particles 100 are those of the solid electrolyte material according to the first embodiment in which X includes I, the coating material may include an oxide solid electrolyte. The oxide solid electrolyte may be lithium niobate, which exhibits an excellent stability even at a high potential. In this case, the battery has a high charge and discharge efficiency.

The positive electrode 201 may consist of a first positive electrode layer including a first positive electrode active material and a second positive electrode layer including a second positive electrode active material. Here, the second positive electrode layer is disposed between the first positive electrode layer and the electrolyte layer 202, the first positive electrode layer and the second positive electrode layer include the solid electrolyte material according to the first embodiment that includes I, and the coating layer 216 is formed on the surface of the second positive electrode active material. According to the above configuration, it is possible to suppress oxidation of the solid electrolyte material according to the first embodiment included in the electrolyte layer 202 caused by the second positive electrode active material. As a result, the battery has a high charge capacity. Examples of the coating material included in the coating layer 206 include a sulfide solid electrolyte, an oxide solid electrolyte, a solid polymer electrolyte, and a halide solid electrolyte. Note that in the case where the coating material is a halide solid electrolyte, the coating material does not include I as a halogen element. The first positive electrode active material may be the same material as the second positive electrode active material, or may be a different material from the second positive electrode active material.

From the viewpoint of energy density and power output of the battery, the positive electrode 201 may have a thickness of 10 µm or more and 500 µm or less.

The electrolyte layer 202 includes an electrolyte material. The electrolyte material is, for example, a solid electrolyte material. The electrolyte layer 202 may be a solid electrolyte layer. The electrolyte layer 202 may include the solid electrolyte material according to the first embodiment. The electrolyte layer 202 may consist of the solid electrolyte material according to the first embodiment.

The electrolyte layer 202 may consist of a solid electrolyte material different from the solid electrolyte material according to the first embodiment. Examples of the solid electrolyte material different from the solid electrolyte material according to the first embodiment include Li₂MgX'₄, Li₂FeX'₄, Li(Al, Ga, In)X'₄, Li₃(Al, Ga, In)X's, and Lil. Here, X' is at least one selected from the group consisting of F, Cl, Br, and I.

Hereinafter, the solid electrolyte material according to the first embodiment is referred to as a first solid electrolyte material. The solid electrolyte material different from the solid electrolyte material according to the first embodiment is referred to as a second solid electrolyte material.

The electrolyte layer 202 may include the first solid electrolyte material, and in addition, include the second solid electrolyte material. The first solid electrolyte material and the second solid electrolyte material may be homogenously dispersed. A layer consisting of the first solid electrolyte material and a layer consisting of the second solid electrolyte material may be stacked along the stacking direction of the battery 1000.

The electrolyte layer 202 may have a thickness of 1 µm or more and 100 µm or less. In the case where the electrolyte layer 202 has a thickness of 1 µm or more, a short-circuit between the positive electrode 201 and the negative electrode 203 tends not to occur. In the case where the electrolyte layer 202 has a thickness of 100 µm or less, the battery can operate at a high power.

Another electrolyte layer may be further provided between the electrolyte layer 202 and the negative electrode 203. That is, a second electrolyte layer may be further provided between the electrolyte layer 202 and the negative electrode 203. For example, in the case where the electrolyte layer 202 includes the first solid electrolyte material, an electrolyte layer consisting of another solid electrolyte material that is electrochemically more stable than the first solid electrolyte material may be further provided between the electrolyte layer 202 and the negative electrode 203 to further stably maintain the high ionic conductivity of the first solid electrolyte material.

The negative electrode 203 includes a material capable of occluding and releasing metal ions (e.g., lithium ions). The negative electrode 203 includes, for example, a negative electrode active material (e.g., the negative electrode active material particles 205).

Examples of the negative electrode active material include a metal material, a carbon material, an oxide, a nitride, a tin compound, and a silicon compound. The metal material may be a metal simple substance or an alloy. Examples of the metal material include a lithium metal and a lithium alloy. Examples of the carbon material include natural graphite, coke, semi-graphitized carbon, a carbon fiber, spherical carbon, artificial graphite, and amorphous carbon. From the viewpoint of capacity density, preferred examples of the negative electrode active material include silicon (i.e., Si), tin (i.e., Sn), a silicon compound, and a tin compound.

The negative electrode active material may be selected on the basis of the reduction resistance of the solid electrolyte material included in the negative electrode 203. In the case where the negative electrode 203 includes the first solid electrolyte material, the negative electrode active material to be used may be a material capable of occluding and releasing lithium ions at 0.27 V or more versus lithium. Using such a material as the negative electrode active material can suppress reduction of the first solid electrolyte material included in the negative electrode 203. As a result, the battery has a high charge and discharge efficiency. Examples of the material include a titanium oxide, an indium metal, and a lithium alloy. Examples of the titanium oxide include Li₄Ti₅O₁₂, LiTi₂O₄, and TiO₂.

The negative electrode active material particles 205 may have a median diameter of 0.1 µm or more and 100 µm or less. In the case where the negative electrode active material particles 205 have a median diameter of 0.1 µm or more, the negative electrode active material particles 205 and the solid electrolyte particles 100 can form a favorable dispersion state in the negative electrode 203. This improves the charge and discharge characteristics of the battery. In the case where the negative electrode active material particles 205 have a median diameter of 100 µm or less, the diffusion rate of lithium in the negative electrode active material particles 205 is improved. This enables the battery to operate at a high power.

The negative electrode active material particles 205 may have a larger median diameter than the solid electrolyte particles 100. In this case, the negative electrode active material particles 205 and the solid electrolyte particles 100 can form a favorable dispersion state.

From the viewpoint of energy density and power output of the battery, the ratio of the volume of the negative electrode active material particles 205 to the sum of the volume of the negative electrode active material particles 205 and the volume of the solid electrolyte particles 100 in the negative electrode 203 may be 0.30 or more and 0.95 or less.

The electrode material 1100 shown in FIG. 2 may be included in the negative electrode 203. To prevent the solid electrolyte particles 100 from reacting with the negative electrode active material (i.e., the electrode active material particles 206), the coating layer 216 may be formed on the surface of each of the electrode active material particles 206. In this case, the battery has a high charge and discharge efficiency. Examples of the coating material included in the coating layer 216 include a sulfide solid electrolyte, an oxide solid electrolyte, a solid polymer electrolyte, and a halide solid electrolyte.

In the case where the solid electrolyte particles 100 are those of the first solid electrolyte material, the coating material may be a sulfide solid electrolyte, an oxide solid electrolyte, or a solid polymer electrolyte. An example of the sulfide solid electrolyte is Li₂S-P₂S₅. An example of the oxide solid electrolyte is trilithium phosphate. An example of the solid polymer electrolyte is a composite compound of polyethylene oxide and a lithium salt. Such a solid polymer electrolyte is, for example, lithium bis(trifluoromethanesulfonyl)imide.

From the viewpoint of energy density and power output of the battery, the negative electrode 203 may have a thickness of 10 µm or more and 500 µm or less.

To increase the ionic conductivity, at least one selected from the group consisting of the positive electrode 201, the electrolyte layer 202, and the negative electrode 203 may include the second solid electrolyte material. Examples of the second solid electrolyte material include a sulfide solid electrolyte, an oxide solid electrolyte, a halide solid electrolyte, and a solid organic polymer electrolyte.

In the present disclosure, the term "sulfide solid electrolyte" refers to a solid electrolyte containing sulfur. The term "oxide solid electrolyte" refers to a solid electrolyte containing oxygen. The oxide solid electrolyte may contain anions in addition to oxygen (excluding sulfur anions and halogen anions). The term "halide solid electrolyte" refers to a solid electrolyte containing a halogen element and being free of sulfur. The halide solid electrolyte may contain oxygen in addition to a halogen element.

Examples of the sulfide solid electrolyte include Li₂S-P₂S₅, Li₂S-SiS₂, Li₂S-B₂S₃, Li₂S-GeS₂, Li_{3.25}G_{20.25}P_{0.75}S₄, and Li₁₀GeP₂S₁₂.

Examples of the oxide solid electrolyte include: (i) a NASICON solid electrolyte such as LiTi₂(PO₄)₃ and element-substituted substances thereof; (ii) a perovskite solid electrolyte such as (LaLi)TiOs; (iii) a LISICON solid electrolyte such as Li₁₄ZnGe₄O₁₆, Li₄SiO₄, and LiGeO₄ and element-substituted substances thereof; (iv) a garnet solid electrolyte such as Li₇La₃Zr₂O₁₂ and element-substituted substances thereof; and (v) Li₃PO₄ and N-substituted substances thereof.

An example of the halide solid electrolyte is a compound represented by LiₐMe'_{b}Y_{c}Z₆. Here, mathematical relations a + mb + 3c = 6 and c > 0 are satisfied. Me' is at least one selected from the group consisting of metalloid elements and metal elements excluding Li and Y Z is at least one selected from the group consisting of F, Cl, Br, and I. The value m represents the valence of Me'.

The "metalloid elements" are B, Si, Ge, As, Sb, and Te. The "metal elements" are: all the elements included in Groups 1 to 12 of the periodic table (excluding hydrogen); and all the elements included in Groups 13 to 16 of the periodic table (excluding B, Si, Ge, As, Sb, Te, C, N, P, O, S, and Se).

To increase the ionic conductivity of the halide solid electrolyte, Me' may be at least one selected from the group consisting of Mg, Ca, Sr, Ba, Zn, Sc, Al, Ga, Bi, Zr, Hf, Ti, Sn, Ta, and Nb.

Examples of the halide solid electrolyte include Li₃YCl₆ and Li₃YBr₆.

In the case where the electrolyte layer 202 includes the first solid electrolyte material, the negative electrode 203 may include a sulfide solid electrolyte. In this case, the sulfide solid electrolyte that is electrochemically stable with respect to the negative electrode active material suppresses contact between the first solid electrolyte material and the negative electrode active material. As a result, the battery has a low internal resistance.

An example of the solid organic polymer electrolyte is a compound of a polymer compound and a lithium salt. The polymer compound may have an ethylene oxide structure. A polymer compound having an ethylene oxide structure can contain a large amount of a lithium salt, and accordingly has a higher ionic conductivity.

Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used.

To facilitate transfer of lithium ions and thereby improve the output characteristics of the battery, at least one selected from the group consisting of the positive electrode 201, the electrolyte layer 202, and the negative electrode 203 may include a nonaqueous electrolyte solution, a gel electrolyte, or an ionic liquid.

The nonaqueous electrolyte solution contains a nonaqueous solvent and a lithium salt dissolved in the nonaqueous solvent. Examples of the nonaqueous solvent include a cyclic carbonate solvent, a linear carbonate solvent, a cyclic ether solvent, a linear ether solvent, a cyclic ester solvent, a linear ester solvent, and a fluorinated solvent. Examples of the cyclic carbonate solvent include ethylene carbonate, propylene carbonate, and butylene carbonate. Examples of the linear carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the linear ether solvent include 1,2-dimethoxyethane and 1,2-diethoxyethane. Examples of the cyclic ester solvent include γ-butyrolactone. Examples of the linear ester solvent include methyl acetate. Examples of the fluorinated solvent include fluoroethylene carbonate, methyl fluoropropionate, fluorobenzene, fluoroethyl methyl carbonate, and fluorodimethylene carbonate. One nonaqueous solvent selected from these may be used alone. Alternatively, a mixture of two or more nonaqueous solvents selected from these may be used.

Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used. The concentration of the lithium salt falls within a range, for example, from 0.5 mol/L to 2 mol/L.

As the gel electrolyte, a polymer material impregnated with a nonaqueous electrolyte solution can be used. Examples of the polymer material include polyethylene oxide, polyacrylonitrile, polyvinylidene fluoride, polymethyl methacrylate, and a polymer having an ethylene oxide bond.

Examples of cations contained in the ionic liquid include:
(i) aliphatic linear quaternary salts such as tetraalkylammoniums and tetraalkylphosphoniums;
(ii) aliphatic cyclic ammoniums such as pyrrolidiniums, morpholiniums, imidazoliniums, tetrahydropyrimidiniums, piperaziniums, and piperidiniums; and
(iii) nitrogen-containing heterocyclic aromatic cations such as pyridiniums and imidazoliums.

Examples of anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

To improve the adhesion between particles, at least one selected from the group consisting of the positive electrode 201, the electrolyte layer 202, and the negative electrode 203 may contain a binder.

Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrenebutadiene rubber, and carboxymethylcellulose. As the binder, a copolymer may be used. Examples of the binder include a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from the above materials may be used.

To increase the electronic conductivity, at least one selected from the group consisting of the positive electrode 201 and the negative electrode 203 may contain a conductive additive.

Examples of the conductive additive include:
(i) graphites such as natural graphite and artificial graphite;
(ii) carbon blacks such as acetylene black and ketjen black;
(iii) conductive fibers such as a carbon fiber and a metal fiber;
(iv) fluorinated carbon;
(v) metal powders such as an aluminum powder;
(vi) conductive whiskers such as a zinc oxide whisker and a potassium titanate whisker;
(vii) a conductive metal oxide such as titanium oxide; and
(viii) a conductive polymer compound such as polyaniline compound, polypyrrole compound, and polythiophene compound. To reduce the cost, the conductive additive in (i) or (ii) above may be used.

Examples of the shape of the battery according to the second embodiment include a coin type, a cylindrical type, a prismatic type, a sheet type, a button type, a flat type, and a stack type.

The battery according to the second embodiment may be manufactured, for example, by preparing a material for forming a positive electrode, a material for forming an electrolyte layer, and a material for forming a negative electrode, and producing by a known method a stack in which the positive electrode, the electrolyte layer, and the negative electrode are disposed in this order.

### Examples

The present disclosure will be described below in more detail with reference to examples.

### (Example 1)

### [Production of Solid Electrolyte Material]

In a dry atmosphere with a dew point of -30°C or less (hereinafter referred to simply as "dry atmosphere"), Li₂O₂ and TaCl₅ were prepared as raw material powders at a molar ratio of Li₂O₂: TaCl₅ = 0.65:1.0. These raw material powders were pulverized and mixed together in a mortar to obtain a mixed powder. The mixed powder was placed in a quartz glass container filled with an argon gas and fired at 320°C for 3 hours. The fired product thus obtained was pulverized in an agate mortar. Thus, a solid electrolyte material according to Example 1 was obtained. The molar ratio Li/M was 1.3. This molar ratio is the value determined from the molar ratio between the raw material powders. The same applies to the molar ratio Li/M in Examples 2 and 3 and Comparative Examples 1 and 2 below.

### [Ionic Conductivity Evaluation]

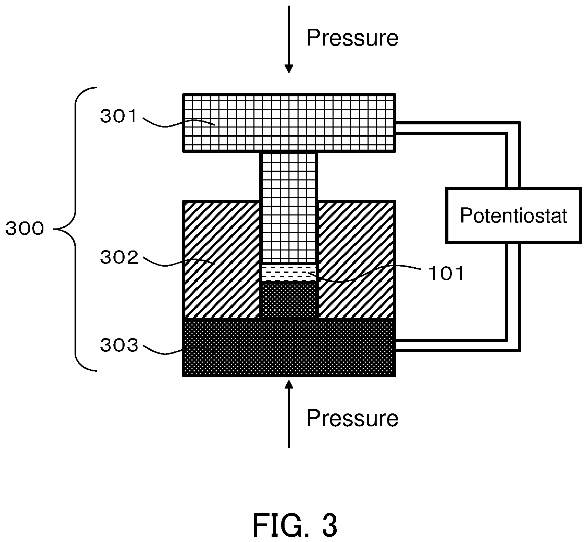

FIG. 3 shows a schematic view of a pressure-molding die 300 used to evaluate the ionic conductivity of solid electrolyte materials.

The pressure-molding die 300 included an upper punch 301, a die 302, and a lower punch 303. The die 302 was formed of polycarbonate, which is insulating. The upper punch 301 and the lower punch 303 were each formed of stainless steel, which is electronically conductive.

The pressure-molding die 300 shown in FIG. 3 was used to measure the ionic conductivity of the solid electrolyte material according to Example 1 by the following method.

In a dry atmosphere, the powder of the solid electrolyte material according to Example 1 (i.e., a solid electrolyte material powder 101 in FIG. 3) was charged into the pressure-molding die 300. Inside the pressure-molding die 300, a pressure of 300 MPa was applied to the solid electrolyte material according to Example 1 with the upper punch 301.

While the pressure was applied to the evaluation cell, the upper punch 301 and the lower punch 303 were connected to a potentiostat (VersaSTAT4 manufactured by Princeton Applied Research) equipped with a frequency response analyzer. The upper punch 301 was connected to the working electrode and the potential measurement terminal. The lower punch 303 was connected to the counter electrode and the reference electrode. The ionic conductivity of the solid electrolyte material according to Example 1 was measured at room temperature by an electrochemical impedance measurement method. The results indicate that the ionic conductivity measured at 22°C was 5.8 mS/cm.

### [Heat Resistance Evaluation]

To evaluate the heat resistance of the solid electrolyte material, the solid electrolyte material according to Example 1 was heat-treated in an argon gas atmosphere at 200°C for 3 hours. Subsequently, the ionic conductivity of the solid electrolyte material according to Example 1 was measured at room temperature. The measurement method for ionic conductivity was the same as that described in the above section [Ionic Conductivity Evaluation]. The results indicate that the ionic conductivity measured at 22°C was 6.6 mS/cm. Thus, the heat treatment caused no decrease in ionic conductivity of the solid electrolyte material. That is, the solid electrolyte material according to Example 1 had an excellent heat resistance.

### [X-ray Diffraction]

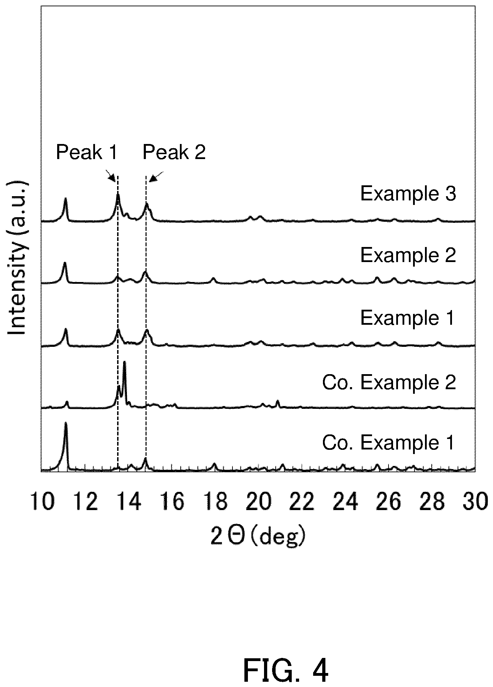

FIG. 4 is a graph showing the X-ray diffraction pattern of the solid electrolyte material according to Example 1. The results shown in FIG. 4 were obtained from measurement performed by the following method.

In a dry atmosphere with a dew point of -45°C or less, the X-ray diffraction pattern of the solid electrolyte material according to Example 1 was measured with an X-ray diffractometer (MiniFlex 600 manufactured by Rigaku Corporation). The X-ray source used was Cu-Kα rays (wavelengths of 1.5405 Å and 1.5444 Å).

The solid electrolyte material according to Example 1 had the first peak at 13.54° and the second peak at 14.88°. The intensity ratio of the first peak to the second peak (hereinafter referred to as "intensity ratio 11/12") was 1.05.

### (Examples 2 and 3 and Comparative Examples 1 and 2)

### [Production of Solid Electrolyte Material]

In Example 2, Li₂O₂ and TaCl₅ were prepared as raw material powders at a molar ratio of Li₂O₂:TaCl₅ = 0.7:1.0. The molar ratio Li/M was 1.4.

In Example 3, Li₂O, LiOH, and TaCl₅ were prepared as raw material powders at a molar ratio of Li₂O: LiOH:TaCl₅ = 0.4:0.4:1.0. The molar ratio Li/M was 1.2.

Solid electrolyte materials according to Examples 2 and 3 were obtained as in Example 1 except for the matters described above.

In Comparative Example 1, in a dry atmosphere, Li₂O₂ and TaCl₅ were prepared as raw material powders at a molar ratio of Li₂O₂:TaCl₅ = 0.8:1.0. These raw material powders were pulverized and mixed together in a mortar to obtain a mixed powder. The mixed powder was placed in a quartz glass container filled with an argon gas and fired at 355°C for 3 hours. The fired product thus obtained was pulverized in an agate mortar. Thus, a solid electrolyte material according to Example 1 was obtained. The molar ratio Li/M was 1.6.

In Comparative Example 2, Li₂0 and TaCl₅ were prepared as raw material powders at a molar ratio of Li₂O:TaCl₅ = 0.6:1.0. The molar ratio Li/M was 1.2. A solid electrolyte material according to Comparative Example 2 was obtained as in Comparative Example 1 except for the matters described above.

### [Ionic Conductivity Evaluation]

As in Example 1, the ionic conductivity was measured with respect to the solid electrolyte materials according to Examples 2 and 3 and Comparative Examples 1 and 2. The measurement results are shown in Table 1.

### [Heat Resistance Evaluation]

As in Example 1, the ionic conductivity after a heat treatment was measured with respect to the solid electrolyte materials according to Examples 2 and 3 and Comparative Examples 1 and 2. The measurement results are shown in Table 1.

### [X-ray Diffraction]

As in Example 1, the X-ray diffraction pattern was measured with respect to the solid electrolyte materials according to Examples 2 and 3 and Comparative Examples 1 and 2. The measurement results are shown in FIG. 4.

The solid electrolyte material according to Example 2 had the first peak at 13.51° and the second peak at 14.83°. The intensity ratio 11112 was 0.70.

The solid electrolyte material according to Example 3 had the first peak at 13.54° and the second peak at 14.85°. The intensity ratio 11112 was 1.72.

The solid electrolyte material according to Comparative Example 1 had the first peak at 13.55° and the second peak at 14.82°. The intensity ratio 11/12 was 0.41.

The solid electrolyte material according to Comparative Example 2 had the first peak at 13.58° and the second peak at 14.92°. The intensity ratio 11/12 was 4.75.

**[Table 1]**

| | Constituent element | Molar ratio Li/M | XRD peak position (2θ (deg)) | | Intensity ratio I1/I2 | Ionic conductivity before heat treatment (mS/cm) | Ionic conductivity after heat treatment (mS/cm) |
|---|---|---|---|---|---|---|---|
| | | | First | Second | | | |
| Example 1 | Li, Ta, O, Cl | 1.3 | 13.54 | 14.88 | 1.05 | 5.8 | 6.6 |
| Example 2 | | 1.4 | 13.51 | 14.83 | 0.70 | 4.9 | 4.9 |
| Example 3 | | 1.2 | 13.54 | 14.85 | 1.72 | 6.2 | 6.7 |
| Comparative Example 1 | | 1.6 | 13.55 | 14.82 | 0.41 | 5.2 | 3.7 |
| Comparative Example 2 | | 1.2 | 13.58 | 14.92 | 4.75 | 1.5 | 1.9 |

### (Discussion)

As is clear from Table 1, the solid electrolyte materials according to Examples 1 to 3 each have a high ionic conductivity of 4.0 mS/cm or more near room temperature, and did not decrease in ionic conductivity even after the heat treatment at 200°C for 3 hours.

As is clear from comparing Examples 1 to 3 with Comparative Example 1, satisfying the intensity ratio I1/I2 of 0.5 or more can achieve a solid electrolyte material in which a decrease in ionic conductivity is reduced even after a heat treatment at 200°C for 3 hours.

As is clear from comparing Examples 1 to 3 and Comparative Example 1 with Comparative Example 2, satisfying the intensity ratio 11112 of 4.50 or less can achieve a solid electrolyte material in which a decrease in ionic conductivity is reduced even after a heat treatment.

The solid electrolyte materials according to Examples 1 to 3 are free of sulfur, and accordingly generate no hydrogen sulfide.

As described above, the solid electrolyte material according to the present disclosure has a practical ionic conductivity and can reduce a heat-induced decrease in ionic conductivity. Therefore, the solid electrolyte material according to the present disclosure is suitable for providing batteries having excellent charge and discharge characteristics.

### INDUSTRIAL APPLICABILITY

The battery of the present disclosure is utilized, for example, in all-solid-state lithium-ion secondary batteries.

## Claims

1. A solid electrolyte material comprising:
Li;
M;
O; and
X, wherein
the M is at least one selected from the group consisting of Nb and Ta,
the X is at least one selected from the group consisting of F, Cl, Br, and I,
the solid electrolyte material has, in an X-ray diffraction pattern obtained by X-ray diffraction measurement using a Cu-Kα ray, a first peak positioned within a range of a diffraction angle 2θ from 13.49° to 13.59° and a second peak positioned within a range of the diffraction angle 2θ from 14.82° to 14.92°, and
an intensity ratio of the first peak to the second peak is 0.50 or more and 4.50 or less.

2. The solid electrolyte material according to claim 1, wherein
the X includes Cl.

3. The solid electrolyte material according to claim 1 or 2, wherein
the M includes Ta.

4. The solid electrolyte material according to any one of claims 1 to 3, wherein
a molar ratio of the Li to the M is 1.2 or more and 1.4 or less.

5. The solid electrolyte material according to any one of claims 1 to 4, wherein
the intensity ratio is 0.70 or more and 1.72 or less.

6. A battery comprising:
a positive electrode;
a negative electrode; and
an electrolyte layer disposed between the positive electrode and the negative electrode, wherein
at least one selected from the group consisting of the positive electrode, the negative electrode, and the electrolyte layer includes the solid electrolyte material according to any one of claims 1 to 5.
